# EUROPÄISCHE PATENTSCHRIFT

(11) **EP 2 171 523 B1**
(45) Veröffentlichungstag und Bekanntmachung des Hinweises auf die Patenterteilung: **10.10.2012**
(21) Anmeldenummer: 08759091.5
(22) Anmeldetag: 07.06.2008
(51) Int. Cl.: G02B 27/14

(54) **VORRICHTUNG ZUM VEREINIGEN EINZELNER LICHTSTRAHLEN VERSCHIEDENER WELLENLÄNGEN ZU EINEM KOAXIALEN LICHTBÜNDEL**
APPARATUS FOR COMBINING INDIVIDUAL LIGHT BEAMS OF DIFFERENT WAVELENGTHS TO FORM A COAXIAL LIGHT BUNDLE
DISPOSITIF POUR REGROUPER DES RAYONS LUMINEUX INDIVIDUELS DE DIFFÉRENTES LONGUEURS D'ONDE EN UN FAISCEAU LUMINEUX COAXIAL

(30) Priorität: 20.07.2007 DE 102007034261
(43) Veröffentlichungstag der Anmeldung: 07.04.2010
(73) Patentinhaber: Lasos Lasertechnik GmbH, 07745 Jena (DE)
(72) Erfinder: BERGANN, Ludwig, 10711 Berlin (DE); MALZ, Ralf, 07743 Jena (DE)
(74) Vertreter: Geyer, Fehners & Partner
(86) Internationale Anmeldenummer: PCT/EP2008/004554
(87) Internationale Veröffentlichungsnummer: WO 2009/012846

(56) Entgegenhaltungen:
- EP-A1- 1 686 407
- WO-A-2006/130724
- DE-A1- 3 328 349
- DE-A1- 19 633 185
- DE-A1-102005 054 184
- DE-C1- 4 214 791
- JP-A- 59 111 614
- US-A1- 2004 105 161
- US-A1- 2005 249 457
- "Catalog 2003" 2003, LINOS AG , GOETTINGEN , XP002493027 Seite L19

## Beschreibung

### Gebiet der Erfindung

Die Erfindung bezieht sich auf eine Vorrichtung, die mehrere Einkoppelpositionen für einzelne Lichtstrahlen aufweist sowie mindestens eine Auskoppelposition für die zu einem koaxialen Lichtbündel vereinigten Lichtstrahlen. Die erfindungsgemäße Vorrichtung zeichnet sich durch eine hochpräzise Überlagerung der einzelnen Lichtstrahlen aus sowie durch eine Winkelpositionierung des koaxialen Lichtbündels mit Winkelabweichungen von weniger als 10 µrad, sie ist insbesondere zur Erzeugung eines kollimierten Lichtbündels als Mehrfarbenquelle zur Verwendung bei der digitalen Bilderzeugung geeignet.

### Stand der Technik

Vorrichtungen zur Vereinigung mehrerer Laserstrahlen verschiedener Lichtwellenlängen zu einem koaxialen Lichtbündel sind an sich aus dem Stand der Technik bekannt. Ein mit solchen Vorrichtungen erzeugtes Lichtbündel wird beispielsweise als RGB-Mehrfarbenquelle bei der Bildgebung in Mikroskopen, insbesondere Laserscanmikroskopen genutzt. Für derartige Anwendungen sind oft Winkelpositionierungen des koaxialen Lichtbündels mit Winkelabweichungen von weniger als 10 µrad erforderlich.

Die Vorrichtungen aus dem Stand der Technik, die diesen Ansprüchen genügen, sind aus verhältnismäßig vielen Einzelteilen aufwendig hergestellt, erfordern eine komplizierte Justage zur präzisen Einkopplung der einzelnen Lichtstrahlen in das Lichtbündel und erschweren die Handhabung insofern, als das Auswechseln einzelner Lichtwellenleiter, mit denen die Lichtstrahlen herangeführt werden, jeweils hohen Zeit- und damit auch Kostenaufwand verursachen.

Außerdem besteht ein wesentlicher, die Genauigkeit im negativen Sinne beeinträchtigender Nachteil darin, daß Schwankungen der Umgebungstemperatur eine Dejustierung der Strahlführung zur Folge haben.

In US 2004/105161 A1 ist eine Vorrichtung zum Vereinigen von Lichtstrahlen beschrieben, die einen Vorrichtungsgrundkörper mit mehreren Einkoppelpositionen für verschiedene Lichtstrahlen und eine Auskoppelposition für ein vereinigtes Lichtbündel aufweist. Diese Vorrichtung ist aufgrund der Winkelabweichungen bei der Überlagerung der einzelnen Lichtstrahlen nicht zur Erzeugung eines kollimierten Lichtbündels als Mehrfarbenquelle zur Verwendung bei der digitalen Bilderzeugung geeignet.

Weitere Vorrichtungen zum Vereinigen von Lichstrahlen sind aus der DE 10 2005 054 184 A1 und der US 2005/0249457 A1 bekannt.

Davon ausgehend liegt der Erfindung die Aufgabe zugrunde, eine Vorrichtung zum präzisen Vereinigen einzelner Lichtstrahlen zu einem koaxialen Lichtbündel zu schaffen, die mit möglichst einfachen, kostengünstig herzustellenden technischen Mitteln realisiert werden kann, ein möglichst geringes Volumen aufweist und auch unter sich ändernden äußeren Bedingungen, insbesondere bei Temperaturschwankungen, genau und funktionssicher arbeitet.

### Beschreibung der Erfindung

Die Aufgabe wird gelöst mit einer Vorrichtung zum präzisen Vereinigen einzelner Lichtstrahlen gemäß Anspruch .1

Bevorzugt sind Lichtwellenleiter, insbesondere optische Single-Mode-Fasern, zur Führung der einzelnen Lichtstrahlen vorgesehen, und es sind Verbindungselemente zur Ankopplung der Lichtwellenleitern an die Vorrichtung bei den Einkoppelpositionen vorhanden. Das koaxiale Lichtbündel kann an der Auskoppelposition optional als Freistrahl austreten oder über Verbindungselemente in einen Lichtwellenleiter eintreten.

Zur Erzeugung der Lichtstrahlen können vorteilhaft Laserstrahlungsquellen vorgesehen sein, deren abgestrahlte Lichtwellenlängen voneinander abweichen.

Die Anzahl der Justiereinrichtungen entspricht der Anzahl der Einkoppelpositionen, so daß jeder Einkoppelposition eine Justiereinrichtung zugeordnet ist. Dabei ist jede der Justiereinrichtungen mit einem dichroitischen Spiegel versehen, der reflexiv ausgebildet ist für die Lichtwellenlänge des an der betreffenden Position einzukoppelnden Lichtstrahles und transparent für die Lichtwellenlängen der Lichtstrahlen, die ihn durchdringen müssen.

Die dichroitischen Spiegel sind innerhalb des Vorrichtungsgrundkörpers in Reihe aufeinander folgend angeordnet, wobei die Richtung dieser Aufreihung der Richtung des koaxialen Lichtbündels entspricht. Dabei ist jeder dichroitische Spiegel zur Richtung des auftreffenden Lichtstrahls so ausgerichtet, daß die Reflexion des Lichtstrahls in das Zentrum des Lichtbündels erfolgt.

Zu diesem Zweck sind die dichroitischen Spiegel im wesentlichen um 45° gegenüber dem einzukoppelnden Lichtstrahl und ebenfalls um 45° gegenüber dem koaxialen Lichtbündel geneigt. Jeder der dichroitischen Spiegel ist zwecks Justierung der Reflexionsrichtung mit einem Gelenk verbunden. Diese Gelenke werden als Festkörpergelenke ausgebildet, wobei jedes Festkörpergelenk mit einem oder mehreren Manipulatoren gekoppelt ist, mit denen die Reflexionsrichtung veränderbar und damit justierbar ist.

Je nach Ausgestaltung der erfindungsgemäßen Vorrichtung sind die Manipulatoren zur manuellen Betätigung ausgebildet, etwa in Form von Stellschrauben oder drehbaren Keilplatten, oder die Manipulatoren sind mit ansteuerbaren elektro-mechanischen Antrieben gekoppelt, die mit einer Ansteuereinheit in Verbindung stehen, die zum Generieren von Stellbefehlen ausgebildet ist.

Der Vorrichtungsgrundkörper kann monolithisch aus Glas, Glaskeramik, Keramik, Kunststoff oder Metall, bevorzugt Edelstahl oder eloxiertem Aluminium, gefertigt sein. Die Justiereinrichtungen, einschließlich der Festkörpergelenke, sind aus dem gleichen Material herzustellen, aus dem auch der Vorrichtungsgrundkörper besteht.

In einer weiterführenden Ausgestaltung der erfindungsgemäßen Vorrichtung sind in den einzelnen Lichtstrahlen Kollimationsoptiken oder ein- oder mehrlinsige Teleskopanordnungen zur Strahlbeeinflussung vorgesehen und vorzugsweise an den Einkoppelpositionen angeordnet.

Zur Verbindung der Lichtwellenleiter mit dem Vorrichtungsgrundkörper an den Einkoppelpositionen können spezielle, hochpräzise Faserstecker vorgesehen sein. Diese Faserstecker sind mit Steckerelementen ausgestattet, die auf der Seite des Lichtwellenleiters und auf der Seite des Vorrichtungsgrundkörpers miteinander korrespondierende Bezugsflächen aufweisen, die ein genaues und reproduzierbares Ausrichten des Lichtwellenleiters relativ zum Vorrichtungsgrundkörper und damit zum jeweiligen dichroitischen Spiegel gewährleisten.

In diesem Zusammenhang weist in einer besonders bevorzugten Ausgestaltung der erfindungsgemäßen Vorrichtung der Vorrichtungsgrundkörper eine polierte Außenfläche mit Flächenbereichen auf, die als Bezugsflächen zur Aufnahme der Faserstecker dienen. Als Hilfsmittel zum Ausrichten der Faserstecker und damit der Lichtwellenleiter relativ zum jeweiligen dichroitischen Spiegel im Vorrichtungsgrundkörper dienen Zentrierringe, wobei jeweils ein Zentrierring auf einem der Flächenbereiche aufsitzt und auf diesem befestigt ist. Auf jeden Zentrierring ist ein der Form der Zentrierringe angepaßter Federring aufgesetzt.

Damit ist ein schnelles und problemloses Ausrichten beim Auswechseln oder Umstecken der Lichtwellenleiter relativ zur Vorrichtung möglich.

Bevorzugt ist das Material an den Flächenbereichen härter ausgeführt als das übrige Material, aus dem der Vorrichtungsgrundkörper besteht. Dazu ist (in Abhängigkeit vom Material des Vorrichtungsgrundkörpers) entweder das Material an der Oberfläche des Vorrichtungsgrundkörpers gehärtet, oder der Vorrichtungsgrundkörper ist bei den Flächenbereichen mit einer harten Beschichtung versehen, oder es ist eine Schicht aus härterem Material in das Material des Vorrichtungsgrundkörpers eingelassen.

Des weiteren liegt es im Rahmen der Erfindung, im koaxialen Lichtbündel an der Auskoppelpositionen Mittel zur Strahlformung vorzusehen, wie zum Beispiel zur Strahlaufweitung oder zur Fokussierung des Lichtbündels.

Die Erfindung soll nachfolgend anhand eines Ausführungsbeispieles näher erläutert werden. In den zugehörigen Zeichnungen zeigen
- Fig.1: die Prinzipdarstellung der erfindungsgemäßen Vorrichtung in einem Querschnitt durch die optischen Achsen der zu vereinigenden Lichtstrahlen und des koaxialen Lichtbündels,
- Fig.2: die erfindungsgemäße Vorrichtung in der Unteransicht der Darstellung nach Fig.1 mit Blick auf die in den Vorrichtungsgrundkörper eingelassenen Justiereinrichtungen,
- Fig.3: als Auszug aus Fig.1 eine der Justiereinrichtungen im Querschnitt durch die Strahlführungsöffnungen für den einzukoppelnden Lichtstrahl und für das koaxiale Lichtbündel,
- Fig.4: eine perspektivische Ansicht der erfindungsgemäßen Vorrichtung mit Blickrichtung auf die Einkoppelpositionen für die zu vereinigenden Lichtstrahlen.

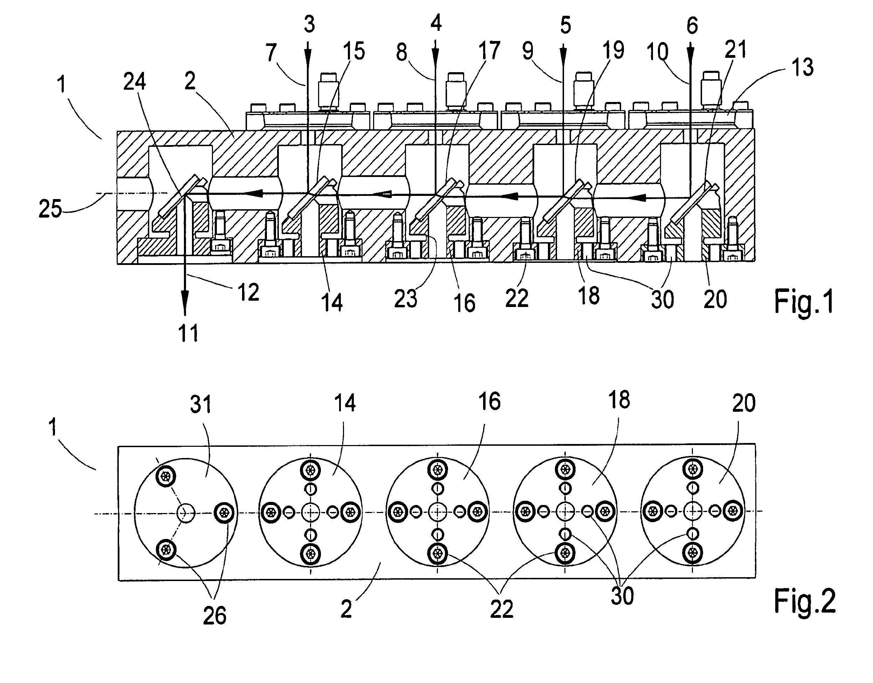

In Fig.1 ist ein Querschnitt durch die erfindungsgemäße Vorrichtung 1 dargestellt. Es ist zu erkennen, daß die Vorrichtung 1 im wesentlichen aus einem Vorrichtungsgrundkörper 2 besteht, der Einkoppelpositionen 3, 4, 5 und 6 für einzelne Lichtstrahlen 7, 8, 9 und 10 aufweist, sowie eine Auskoppelposition 11, an der ein koaxiales Lichtbündel 12 austritt, in welchem die Lichtstrahlen 7, 8, 9, 10 vereinigt sind.

Die Lichtstrahlen 7, 8, 9, 10 sind vorzugsweise Laserstrahlen verschiedener Lichtwellenlängen, die mit Lichtwellenleitern (zeichnerisch nicht dargestellt) an die Vorrichtung 1 herangeführt werden. So wird beispielsweise mit dem Lichtstrahl 7 Licht des Wellenlängenbereichs "rot" in die Vorrichtung 1 eingekoppelt. Die übrigen Lichtstrahlen 8, 9, 10 seien Lichtwellenlängen in den Bereichen "grün", "blau" und "ultraviolett" vorbehalten.

Zur Verbindung der Lichtwellenleiter mit dem Vorrichtungsgrundkörper 2 bzw. zur Einkopplung der Lichtstrahlen 7, 8, 9, 10 in die Vorrichtung 1 sind Faserstecker 13 vorgesehen.

Das koaxiale Lichtbündel 11 tritt in dem hier gewählten Ausführungsbeispiel als freier Lichtstrahl aus. Abweichend davon ist es jedoch denkbar, auch an der Auskoppelposition 11 einen Faserstecker 13 anzuordnen und das koaxiale Lichtbündel 12 innerhalb eines Lichtwellenleiters von der Vorrichtung 1 zu einer bildgebenden Geräteeinheit weiterzuführen.

Der Einkoppelposition 3 ist eine Justiereinrichtung 14 zugeordnet, die einen dichroitischen Spiegel 15 trägt. In analoger Weise sind der Einkoppelposition 4 eine Justiereinrichtung 16 mit einem dichroitischen Spiegel 17, der Einkoppelposition 5 eine Justiereinrichtung 18 mit einem dichroitischen Spiegel 19 und der Einkoppelposition 6 eine Justiereinrichtung 20 mit einem dichroitischen Spiegel 21 zugeordnet.

Die dichroitischen Spiegel 15, 17, 19, 21 sind im wesentlichen jeweils um 45° gegenüber dem einzukoppelnden Lichtstrahl 7, 8, 9, 10 und auch um 45° gegenüber dem noch innerhalb des Vorrichtungsgrundkörpers 2 verlaufenden koaxialen Lichtbündel 12 ausgerichtet. Die Bezeichnung "im wesentlichen" bedeutet in diesem Zusammenhang, daß es nicht auf die genaue Einhaltung der 45°-Neigung ankommt, sondern auf die Richtung, in die der jeweilige Lichtstrahl 7, 8, 9, 10 beim Auftreffen auf den ihm zugeordneten dichroitischen Spiegel 15, 17, 19, 21 reflektiert wird. Diese Richtung soll mit möglichst geringer Abweichung der Richtung des Zentrums des koaxialen Lichtbündels 12 innerhalb des Vorrichtungsgrundkörpers 2 entsprechen.

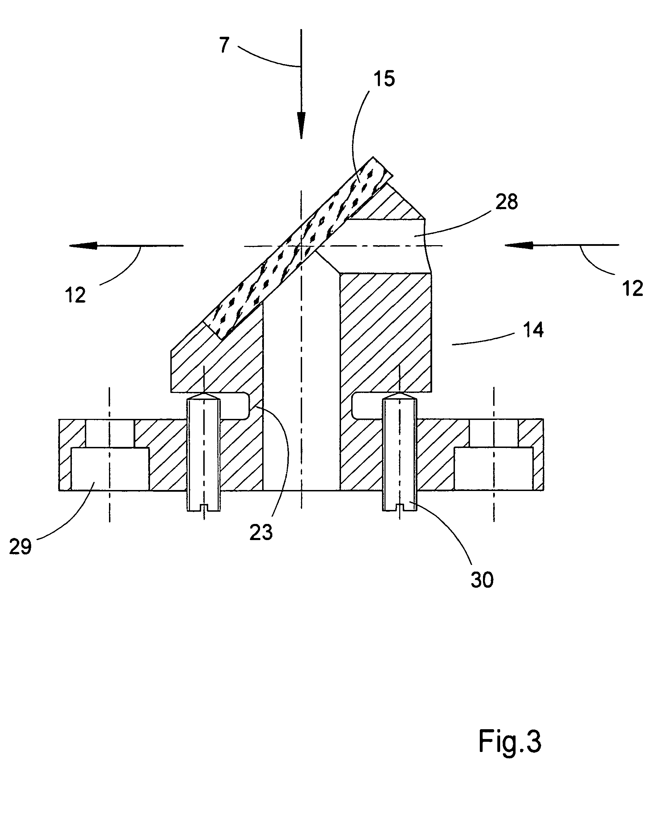

Um dies zu erreichen, ist jede der Justiereinrichtungen 14, 16, 18, 20 mit einem Festkörpergelenk 23 versehen. Mit Hilfe der Festkörpergelenke 23 lassen sich die Neigungen der dichroitischen Spiegel 15, 15, 19, 21 um den Betrag justieren, der erforderlich ist, um die vorgenannte Bedingung zu erfüllen. Diese Justiermöglichkeit wird weiter unten anhand Fig.3 noch näher erläutert.

Es sei darauf hingewiesen, daß es im Rahmen der Erfindung liegt, wenn mit der Justierung auch gezielt geringe Unterschiede des Strahlverlaufs zwischen den einzelnen Lichtstrahlen eingestellt werden.

Der dichroitische Spiegel 15 so ausgebildet, daß er für die Lichtwellenlänge des Lichtstrahls 7 reflexiv, dagegen für die Lichtwellenlängen der Lichtstrahlen 8, 9 und 10 transparent ist. In analoger Weise ist der dichroitsche Spiegel 17 für den Lichtstrahl 8 reflexiv, für die Lichtstrahlen 9 und 10 transparent ausgebildet, und der dichroitische Spiegel 19 ist für den Lichtstrahl 9 reflexiv, für den Lichtstrahl 10 transparent ausgebildet, während der dichroitische Spiegel 21 für den Lichtstrahl 10 reflexiv ausgebildet ist.

Um das koaxiale Lichtbündel 12 in der Richtung wie in Fig.1 dargestellt auskoppeln zu können, ist innerhalb des Vorrichtungsgrundkörpers 2 ein Spiegel 24 vorgesehen, der für die Wellenlängen aller eingekoppelten Lichtstrahlen 7, 8, 9, 10 reflexiv ist, so daß die im koaxialen Lichtbündel 12 vereinigten Lichtstrahlen 7, 8, 9, 10 innerhalb des Vorrichtungsgrundkörpers 2 am Spiegel 24 zur Auskoppelposition 11 hin umgelenkt werden.

Alternativ dazu ist es möglich und liegt auch im Rahmen der Erfindung, auf den Spiegel 24 zu verzichten und dadurch die Auskoppelposition 11 an die Position 25 zu verlegen. Auch dort kann alternativ vorgesehen sein, das Lichtbündel 12 als Freistrahl austreten zu lassen oder mittels eines weiteren Fasersteckers 13 in einen Lichtwellenleiter einzukoppeln.

Ebenfalls denkbar ist es, den Spiegel 24 durch einen polarisierenden Strahlteiler zu ersetzen und so das koaxiale Lichtbündel 12 mit einem weiteren, dazu senkrechten Lichtstrahl zu vereinigen, der seinerseits ein Lichtbündel aus Licht verschiedener Wellenlängen sein kann.

Wie aus Fig.1 ersichtlich, sind die Justiereinrichtung 14, 16, 18, 20 mittels Schraubverbindungen, beispielhaft durch Schrauben 22, am Vorrichtungsgrundkörper 2 befestigt.

In die Lichtstrahlen 7, 8, 9, 10 können (vorzugsweise an den Einkoppelpositionen 3, 4, 5, 6) Kollimationslinsen gestellt sein, die beispielsweise eine Brennweite f = 4 mm aufweisen und die bewirken, daß die Lichtstrahlen 7, 8, 9, 10 mit Strahldurchmessern von etwa 1 mm auf die dichroitischen Spiegel 15, 17, 19, 21 treffen, wenn diese Lichtstrahlen mit optischen Fasern von NA ≈ 0,1 herangeführt werden.

Vergleichbar können an der Auskoppelposition 11 optische Elemente in das koaxiale Lichtbündel 12 gestellt sein, die eine Aufweitung des Lichtbündels 12 auf einen Strahldurchmesser bewirken, der dem Verwendungszweck des Lichtbündels 12 entspricht.

Der Vorrichtungsgrundkörper 2 sei beispielsweise aus Edelstahl mit geringem Ausdehnungskoeffizienten gefertigt sein. Um den äußeren Einfluß von Temperaturschwankungen auf die Vorrichtung 1 und damit Genauigkeitsabweichungen bei der Strahlführung gering zu halten, sollten die Justiereinrichtungen 14, 16, 18, 20 einschließlich der Festkörpergelenke 23 aus demselben Edelstahl hergestellt sein.

Fig.2 zeigt die Unteransicht der Darstellung nach Fig.1 mit Blick auf die in den Vorrichtungsgrundkörper eingelassenen Justiereinrichtungen. Hier sind die an den Einkoppelpositionen 3, 4, 5, 6 in den Vorrichtungsgrundkörper 2 eingesetzten Justiereinrichtungen 14, 16, 18, 20 ebenso zu erkennen wie die Zylinderschrauben 22, mit denen die Justiereinrichtungen 14, 16, 18, 20 am Vorrichtungsgrundkörper 2 befestigt sind.

An der Auskoppelposition 11 ist eine Halterung 31 für den Spiegel 24 dargestellt, die mit drei Zylinderschrauben 26 am Vorrichtungsgrundkörper 2 befestigt ist.

In Fig.3 ist beispielhaft die Justiereinrichtung 14 als Einzelheit aus Fig.1 dargestellt. Zu erkennen ist hier der dichroitische Spiegel 15 sowie eine Durchlaßöffnung 28 für das koaxiale Lichtbündel 12.

Weiterhin sind zu erkennen die Bohrungen 29 für die Zylinderschrauben 22, mit denen die Justiereinrichtung 14 am Vorrichtungsgrundkörper 2 befestigt ist, die als Festkörpergelenk 23 wirkende Schwächung des Materialquerschnitts sowie die durch Gewindebohrungen in der Justiereinrichtung 14 hindurchgeführten Stellschrauben 30.

Der Justiereinrichtung 14 sind ebenso wie den übrigen Justiereinrichtungen 16, 18 und 20 jeweils vier dieser Stellschrauben 30 zugeordnet, deren Positionierung aus Fig.3 im Zusammenhang mit Fig.2 ersichtlich ist. Durch Manipulation an den Stellschrauben 30 und die damit verbundene Beeinflussung des jeweiligen Festkörpergelenks 23 läßt sich die Ausrichtung des dichroitischen Spiegels 15 variieren, bis die präzise Ausrichtung des eingekoppelten Lichtstrahls 7 in die gewünschte Richtung, nämlich die des koaxialen Lichtbündels 12, gewährleistet ist.

In Abhängigkeit von den Eigenschaften des Materials, aus dem die Festkörpergelenke 23 bzw. bei monolithischer Ausführung der Vorrichtungsgrundkörper 2 einschließlich der Festkörpergelenke 23 bestehen, erfolgt die Ausrichtung des dichroitischen Spiegels 15 mit der Manipulation durch plastische oder elastische Verformung dieses Materials.

In einer weiterführenden Ausgestaltung der erfindungsgemäßen Vorrichtung sind nicht nur Mittel in Form der Justiereinrichtungen 14, 16, 18, 20 zur Winkelausrichtung der einzukoppelnden Lichtstrahlen 7, 8, 9, 10 vorgesehen, sondern auch Mittel zur Verschiebung der einzukoppelnden Lichtstrahlen 7, 8, 9, 10 senkrecht zur Strahlrichtung, wie nachfolgend erläutert wird.

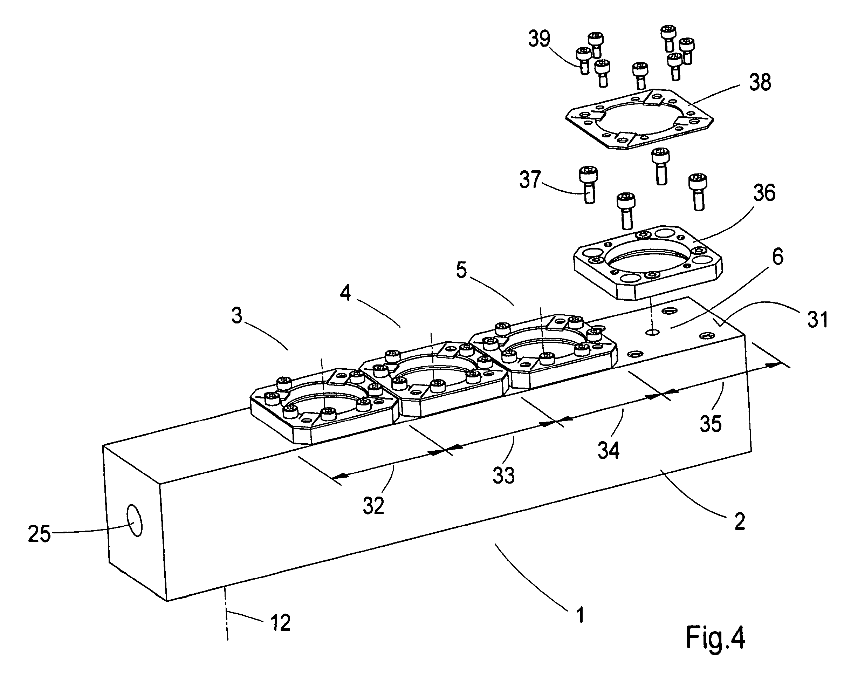

An den Vorrichtungsgrundkörper 2 ist, wie aus Fig.4 ersichtlich, eine polierte hochebene Außenfläche 31 angearbeitet, die vier Flächenbereiche 32, 33, 34 und 35 aufweist. Die Flächenbereichen 32, 33, 34, 35 dienen als Bezugsflächen zur Aufnahme und zum genauen und reproduzierbaren Ausrichten der Faserstecker 13.

Erfindungsgemäß sind zum Zweck des Ausrichtens der Faserstecker 13 bei deren Ankopplung an den Vorrichtungsgrundkörper 2 Zentrierringe 36 vorgesehen, wobei jeweils ein Zentrierring 36 auf einem der Flächenbereiche 32, 33, 34, 35 aufsitzt und auf diesem befestigt ist. Wie in Fig.4 beispielhaft bei der Einkoppelposition 6 gezeigt, erfolgt die Befestigung der Zentrierringe 36 am Vorrichtungsgrundkörper 2 mittels Zylinderschrauben 37.

Auf jeden Zentrierring 36 ist ein der Form der Zentrierringe 36 angepaßter Federring 38 aufgesetzt und mit beispielsweise acht Zylinderschrauben 39 befestigt.

Das Material an den vier Flächenbereichen 32, 33, 34, 35 ist bevorzugt härter ausgeführt als das übrige Material, aus dem der Vorrichtungsgrundkörper 2 besteht. Dazu ist in Abhängigkeit vom Material des Vorrichtungsgrundkörpers 2 entweder das Material an der Oberfläche gehärtet, oder mit einer harten Beschichtung versehen, oder es ist eine Schicht aus härterem Material in das Material des Vorrichtungsgrundkörpers 2 eingelassen.

### Bezugszeichenliste

- 1: Vorrichtung
- 2: Vorrichtungsgrundkörper
- 3, 4, 5, 6: Einkoppelpositionen
- 7, 8, 9, 10: Lichtstrahlen
- 11: Auskoppelposition
- 12: koaxiales Lichtbündel
- 13: Faserstecker
- 14, 16, 18, 20: Justiereinrichtungen
- 15, 17, 19, 21: dichroitische Spiegel
- 22: Zylinderschraube
- 23: Festkörpergelenk
- 24: Spiegel
- 25: Position
- 26: Zylinderschraube
- 27: Aufnahmefläche
- 28: Durchlaßöffnung
- 29: Bohrung
- 30: Stellschrauben
- 31: Außenfläche
- 32, 33, 34, 35: Flächenbereiche
- 36: Zentrierring
- 37: Zylinderschraube
- 38: Federring
- 39: Zylinderschraube

## Patentansprüche

1. Vorrichtung (1) zum Vereinigen einzelner Lichtstrahlen (7, 8, 9, 10) zu einem koaxialen Lichtbündel (12), umfassend
- einen Vorrichtungsgrundkörper (2) mit mehreren Einkoppelpositionen (3, 4, 5, 6) für die Lichtstrahlen (7, 8, 9, 10) und einer Auskoppelposition (11) für das Lichtbündel (12), wobei die Lichtwellenlängen der einzelnen Lichtstrahlen (7, 8, 9, 10) voneinander abweichen,
- dichroitische Spiegel (15, 17, 19, 21), die den Einkoppelpositionen (3, 4, 5, 6) zugeordnet sind und jeweils reflexiv ausgebildet sind für die Lichtwellenlänge eines einzukoppelnden Lichtstrahls (7, 8, 9, 10),
- **dadurch gekennzeichnet, daß**
- Justiereinrichtungen (14, 16, 18, 20) zum koaxialen Ausrichten der einzelnen Lichtstrahlen (7, 8, 9, 10) relativ zur Strahlrichtung des Lichtbündels (12) vorhanden sind, wobei
- jeder dichroitische Spiegel (15, 17, 19, 21) mit einem Gelenk zur Beeinflussung der Richtung des reflektierten und dabei in die Richtung des Lichtbündels (12) umgelenkten Lichtstrahles (7, 8, 9, 10) verbunden ist, wobei
- die Gelenke Bestandteile der Justiereinrichtungen (14, 16, 18, 20) sind, als Festkörpergelenke (23) ausgebildet sind und jedes Festkörpergelenk (23) mit einem Manipulator zur Beeinflussung der Reflektionsrichtung des reflektierten Lichtstrahles (7, 8, 9, 10) gekoppelt ist, und wobei
- die Festktirpergelenke (23) ebenso wie die Justiereinrichtungen (14, 16, 18, 20) aus dem gleichen Material gefertigt sind, aus dem auch der Vorrichtungsgrundkörper (2) besteht.

2. Vorrichtung nach Anspruch 1, **dadurch gekennzeichnet, dass** Lichtwellenleiter zur Führung der Lichtstrahlen (7, 8, 9, 10) und/oder des Lichtbündels (12) vorgesehen und an den Einkoppelpositionen (3, 4, 5, 6) und/oder an der Auskoppelposition (11) Verbindungselemente zur Ankopplung der Lichtwellenleiter vorhanden und zum Generieren der Lichtstrahlen (7, 8, 9, 10) bevorzugt Laserstrahlungsquellen vorgesehen sind.

3. Vorrichtung nach einem der vorgenannten Ansprüche, **dadurch gekennzeichnet, dass** die Anzahl der Justiereinrichtungen (14, 16, 18, 20) der Anzahl der Einkoppelpositionen (3, 4, 5, 6) entspricht und jeder Einkoppelposition (3, 4, 5, 6) eine Justiereinrichtung (14, 16, 18, 20) zugeordnet ist.

4. Vorrichtung nach einem der vorgenannten Ansprüche, bei der die dichroitischen Spiegel (15, 17, 19, 21) so zur Richtung der Lichtstrahlen (7, 8, 9, 10) ausgerichtet sind, daß diese in die optische Achse des Lichtbündels (12) reflektiert werden, wobei die dichroitischen Spiegel (15, 17, 19, 21) bevorzugt jeweils um 45° geneigt gegenüber dem betreffenden Lichtstrahl (7, 8, 9, 10) und um 45° geneigt gegenüber dem auszukoppelnden Lichtbündel (12) angeordnet sind.

5. Vorrichtung nach einem der vorgenannten Ansprüche, bei der die Manipulatoren
- in Form von Stellschrauben oder drehbaren Keilplatten zur manuellen Beeinflussung der Reflektionsrichtung des reflektierten Lichtstrahles (7, 8, 9, 10) ausgebildet sind, oder
- mit ansteuerbaren elektro-mechanischen Antrieben zur Beeinflussung der Reflektionsrichtung des reflektierten Lichtstrahles (7, 8, 9, 10) gekoppelt sind und die Antriebe mit einer Ansteuereinheit in Verbindung stehen, die zum Generieren von Stellbefehlen ausgebildet ist.

6. Vorrichtung nach einem der vorgenannten Ansprüche, bei welcher der Vorrichtungsgrundkörper (2) monolithisch aus Glas, Glaskeramik, Keramik, Kunststoff oder Metall, bevorzugt Edelstahl oder eloxiertem Aluminium, gefertigt ist.

7. Vorrichtung nach einem der vorgenannten Ansprüche, bei der im Strahlengang der einzelnen Lichtstrahlen (7, 8, 9, 10) an den Einkoppelpositionen (3, 4, 5, 6) Optiken, bevorzugt Kollimationslinsen, oder ein- oder mehrlinsige Teleskopanordnungen zur Strahlbeeinflussung vorgesehen sind.

8. Vorrichtung nach einem der vorgenannten Ansprüche, bei welcher zur Verbindung der Lichtwellenleiter mit dem Vorrichtungsgrundkörper (2) an den Einkoppelpositionen (3, 4, 5, 6) Faserstecker (13) vorgesehen sind, wobei bevorzugt
- der Vorrichtungsgrundkörper (2) eine polierte Außenfläche (31) mit Flächenbereichen (32, 33, 34, 35) aufweist, die als Bezugsflächen zur Aufnahme und zum Ausrichten der Faserstecker (13) und damit der Lichtwellenleiter relativ zum jeweiligen dichroitischen Spiegel (15, 17, 19, 21) im Vorrichtungsgrundkörper (2) dienen, und
- als Hilfsmittel zum Ausrichten der Faserstecker (13) Zentrierringe (36) vorgesehen sind, wobei jeweils ein Zentrierring 36 auf einem der Flächenbereiche (32, 33, 34, 35) aufsitzt und auf diesem befestigt ist.

9. Vorrichtung nach einem der vorgenannten Ansprüche, bei der im koaxialen Lichtbündel (12) an der Auskoppelposition (11) Mittel zur Strahlformung vorgesehen sind, bevorzugt in Form von ein- oder mehrlinsigen Teleskopanordnungen.

## Claims

1. An apparatus (1) for combining individual light beams (7, 8, 9, 10) into a coaxial light bundle (12), comprising
- a basic body (2) of the apparatus with several input positions (3, 4, 5, 6) for the light beams (7, 8, 9, 10) and an output position (11) for the light bundle (12), with the light wavelengths of the individual light beams (7, 8, 9, 10) differing from each other,
- dichroic mirrors (15, 17, 19, 21), each of which is assigned to one of the input positions (3, 4, 5, 6) and is made to reflect the light wavelength of one of the input light beams (7, 8, 9, 10),
- **characterized in that**
- adjusting devices (14, 16, 18, 20) are provided for coaxially orienting the individual light beams (7, 8, 9, 10) relative to the beam direction of the light bundle (12), with
- each dichroic mirror (15, 17, 19, 21) being connected to a joint for influencing the direction of the individual light beams (7, 8, 9, 10) reflected into the direction of the light bundle (12), with
- the joints being parts of the adjusting devices (14, 16, 18, 20) and being configured as elastic hinges, and each elastic hinge (23) being coupled with a manipulator for influencing the reflection direction of the reflected light beam (7, 8, 9, 10), and with
- the elastic hinges (23), and likewise the adjusting devices (14, 16, 18, 20), are made of the same material as that of which the basic body (2) consists.

2. An apparatus as claimed in Claim 1, **characterized in that** optical waveguides are provided for guiding the light beams (7, 8, 9, 10) and/or the light bundle (12), and that connecting elements for coupling the optical waveguides are provided at the input positions (3, 4, 5, 6) and/or at the output position (11), and that preferably laser radiation sources are intended for generating the light beams (7, 8, 9, 10).

3. An apparatus as claimed in any one of the previous claims, **characterized in that** the number of adjusting devices (14, 16, 18, 20) corresponds to the number of input positions (3, 4, 5, 6) and that each input position (3, 4, 5, 6) is assigned an adjusting device (14, 16, 18, 20).

4. An apparatus as claimed in any of the previous claims, in which the dichroic mirrors (15, 17, 19, 21) are oriented into the direction of the light beams (7, 8, 9, 10) in such a way that the latter are reflected into the optical axis of the light bundle (12), with the dichroic mirrors (15, 17, 19, 21) being preferably arranged inclined at an angle of 45° relative to the respective light beam (7, 8, 9, 10) and inclined at an angle of 45° relative to the output light bundle (12).

5. An apparatus as claimed in any of the previous claims, in which the manipulators
- are configured in the form of adjusting screws or rotatable wedge plates for manually influencing the reflection direction of the reflected light beam (7, 8, 9, 10), or
- are coupled with controllable electromechanical drivers for influencing the reflection direction of the reflected light beam (7, 8, 9, 10) and the drivers are connected to a control unit made to generate adjusting commands.

6. An apparatus as claimed in any of the previous claims, in which the basic body (2) is made as a monolith of glass, vitroceramic, ceramic, plastic, or metal, preferably stainless steel or anodized aluminium.

7. An apparatus as claimed in any of the previous claims, in which, for influencing the beams, optical components, preferably collimating lenses or single- or multi-lens telescope arrangements, are provided at the input positions (3, 4, 5, 6) in the paths of the individual light beams (7, 8, 9, 10).

8. An apparatus as claimed in any of the previous claims, in which, for connecting the optical waveguides to the basic body (2) fibre connectors are provided at the input positions (3, 4, 5, 6), with
- the basic body (2) preferably having a polished outer surface (31) with surface areas (32, 33, 34, 35) that serve as reference surfaces for receiving and aligning the fibre connectors (13) and thus, the optical waveguides, relative to the respective dichroic mirror (15, 17, 19, 21) in the basic body (2), and
- centring rings (36) being provided as auxiliary means for aligning the fibre connectors (31), with one centring ring (36) resting on each of the surface areas (32, 33, 34, 35) and fastened to it.

9. An apparatus as claimed in any of the previous claims, in which means for beam shaping are provided at the output position (11) of the coaxial light bundle (12), preferable in the form of single- or multi-lens telescope arrangements.

## Revendications

1. Dispositif (1) pour regrouper différents rayons lumineux (7, 8, 9, 10) en un faisceau lumineux (12) coaxial, comportant
- un corps de base (2) avec plusieurs points d'injection (3, 4, 5, 6) pour les rayons lumineux (7, 8, 9, 10) et un point de sortie (11) pour le faisceau lumineux (12), les longueurs d'ondes des différents rayons lumineux (7, 8, 9, 10) étant différentes les unes des autres,
- des miroirs dichroïques (15, 17, 19, 21), qui sont associés aux points d'injection (3, 4, 5, 6) et qui sont réalisés chacun de manière à réfléchir pour les longueurs d'onde d'un rayon lumineux (7, 8, 9, 10) à injecter,
- **caractérisé en ce que**
- il est prévu des dispositifs d'ajustage (14, 16, 18, 20) pour l'alignement coaxial des différents rayons lumineux (7, 8, 9, 10) par rapport à la direction de rayonnement du faisceau lumineux (12),
- chaque miroir dichroïque (15, 17, 19, 21) étant relié à une articulation pour influer sur la direction du rayon lumineux (7, 8, 9, 10) réfléchi et, en l'occurrence, dévié dans la direction du faisceau lumineux (12),
- lesdites articulations étant des parties intégrantes des dispositifs d'ajustage (14, 16, 18, 20), étant réalisées sous forme d'articulations de corps fixes (23) et chaque articulation de corps fixe (23) étant couplée à un manipulateur pour influer sur la direction de réflexion du rayon lumineux (7, 8, 9, 10) réfléchi, et
- les articulations de corps fixe (23), tout comme les dispositifs d'ajustage (14, 16, 18, 20), étant réalisées dans le même matériau dans lequel est aussi réalisé le corps de base (2).

2. Dispositif selon la revendication 1, **caractérisé en ce qu'**il est prévu des guides d'ondes optiques pour guider les rayons lumineux (7, 8, 9, 10) et/ou le faisceau lumineux (12), et des éléments de liaison pour coupler les guides d'ondes optiques sont présents au niveau des points d'injection (3, 4, 5, 6) et/ou au niveau du point de sortie (11), et il est prévu, de préférence, des sources de rayonnement laser pour générer les rayons lumineux (7, 8, 9, 10).

3. Dispositif selon l'une quelconque des revendications précédentes, **caractérisé en ce que** le nombre de dispositifs d'ajustage (14, 16, 18, 20) correspond au nombre de points d'injection (3, 4, 5, 6) et un dispositif d'ajustage (14, 16, 18, 20) est associé à chaque point d'injection (3, 4, 5, 6).

4. Dispositif selon l'une quelconque des revendications précédentes, dans lequel les miroirs dichroïques (15, 17, 19, 21) sont orientés par rapport à la direction des rayons lumineux (7, 8, 9, 10) de telle sorte que ceux-ci sont réfléchis dans l'axe optique du faisceau lumineux (12), lesdits miroirs dichroïques (15, 17, 19, 21) étant agencés chacun, de préférence, de manière inclinée à 45° par rapport au rayon lumineux (7, 8, 9, 10) concerné et de manière inclinée à 45° par rapport au faisceau lumineux (12) à faire sortir.

5. Dispositif selon l'une quelconque des revendications précédentes, dans lequel les manipulateurs
- sont réalisés sous forme de vis de réglage ou de clavettes rotatives pour influer manuellement sur la direction de réflexion du rayon lumineux (7, 8, 9, 10) réfléchi, ou
- sont couplés à des système d'entraînement électromécaniques aptes à être commandés, en vue d'influer sur la direction de réflexion du rayon lumineux (7, 8, 9, 10) réfléchi, et les systèmes d'entraînement coopèrent avec une unité de commande qui est réalisée pour générer des instructions de réglage.

6. Dispositif selon l'une quelconque des revendications précédentes, dans lequel le corps de base (2) est un corps monobloc en verre, vitrocéramique, céramique, matière plastique ou métal, de préférence de l'acier inoxydable ou de l'aluminium anodisé.

7. Dispositif selon l'une quelconque des revendications précédentes, dans lequel des éléments optiques, de préférence des lentilles de collimation, ou des système de télescope à une ou plusieurs lentilles, sont prévus dans la trajectoire des différents rayons lumineux (7, 8, 9, 10) au niveau des points d'injection (3, 4, 5, 6) en vue d'influer sur le rayonnement.

8. Dispositif selon l'une quelconque des revendications précédentes, dans lequel des fiches mâles (13) pour fibres optiques sont prévues au niveau des points d'injection (3, 4, 5, 6) pour relier les guides d'ondes optiques avec le corps de base (2),
- le corps de base (2) comportant de préférence une face extérieure (31) polie avec des zones (32, 33, 34, 35) formant des surfaces de référence destinées à recevoir et aligner les fiches mâles (13) pour fibres optiques et, de ce fait, les guides d'ondes optiques par rapport à chacun des miroirs dichroïques (15, 17, 19, 21) dans le corps de base (2), et
- des bagues de centrage (36) étant prévues comme moyens auxiliaires d'alignement des fiches mâles (13) pour fibres optiques, respectivement une bague de centrage (36) étant posée sur une des zones (32, 33, 34, 35) et étant fixée sur celle-ci.

9. Dispositif selon l'une quelconque des revendications précédentes, dans lequel des moyens de formage du rayon, de préférence sous forme de systèmes de télescope à une ou plusieurs lentilles, sont prévus dans le faisceau lumineux (12) coaxial au niveau du point de sortie (11).
